# EUROPÄISCHE PATENTSCHRIFT

(11) **EP 0 344 609 B1**
(45) Veröffentlichungstag und Bekanntmachung des Hinweises auf die Patenterteilung: **11.01.1995**
(21) Anmeldenummer: 89109421.1
(22) Anmeldetag: 24.05.1989
(51) Int. Cl.: H04L 12/28

(54) **Digitales Signalübertragungssystem für die Hausleittechnik**
Digital signal transmission system for domestic application
Système de transmission numérique pour installations domestiques

(30) Priorität: 01.06.1988 DE 3818601
(43) Veröffentlichungstag der Anmeldung: 06.12.1989
(73) Patentinhaber: GEBRÜDER MERTEN GMBH & CO. KG, D-51643 Gummersbach (DE)
(72) Erfinder: Schmidt, Helmut, Dipl.-Ing., D-5270 Gummersbach (DE)
(74) Vertreter: Selting, Günther, Dipl.-Ing.

(56) Entgegenhaltungen:
- DE-A- 2 946 177
- IEEE TRANSACTIONS ON CONSUMER ELECTRONICS. vol. CE-32, no. 1, Februar 1986, NEW YORK US Seiten 9 - 18; R.HAMABE et al.: "HOME BUS SYSTEM (HBS) INTERFACE LSI AND ITS STANDARD PROTOCOL EXAMPLE"

## Beschreibung

Die Erfindung bezieht sich auf ein digitales Signalübertragungssystem für korrespondierende Geräte zum Schalten, Steuern, Regeln, Messen und/oder überwachen, insbesondere für die Verwendung in der Hausleittechnik mit Hilfe von Gerätestellen, die über ein Leitungsverbundnetzwerk, z.B. in Baumstruktur, miteinander verbunden sind, von dem das jeweilige Leitungsende durch je eine Gerätestelle abgeschlossen wird, die in der Lage ist, ein Signal-Telegramm zu erzeugen und auszusenden bzw. zu empfangen und auszuwerten.

Durch die DE-A-28 32 942 ist ein Hausleitsystem zur Übertragung von Daten und Signalen zwischen einer Eingangsstelle und mindestens einer Gerätestelle bekannt. Bei diesem bekannten System weisen die Eingabestelle und jede Gerätestelle jeweils ein Ein-/Ausgabeteil und ein Sende-/Empfangsteil zur Ein-Ausgabe sowie zur Modulation/Demodulation sowie zur Selektion von Telegrammen auf. Die Übertragung der Daten und Signale erfolgt über das Stromversorgungsnetz des Hauses.

Auf den ersten Blick mag die Einbeziehung des vorhandenen Stromversorgungsnetzes als Übertragungsmedium von Vorteil sein, denn durch die Doppelnutzung des Leitungsnetzes wird die Installation des Hausleitübertragungsnetzes eingespart. Bei näherer Betrachtung ist jedoch in Bezug auf die Funktions- und Störsicherheit ein erheblicher Mehraufwand erforderlich.

Sieht man, unabhängig von den technischen Gegebenheiten, das bekannte System als Einheit, so bilden die jeweiligen Netzsteckdosen die Systemschnittstellen in Form passiver Koppelelemente, über die die Eingabestelle und die Gerätestellen miteinander korrespondieren.

Durch die DE-A-29 46 177 ist ein Informationsübertragungssystem für eine Hausanlage bekannt, welches zur Signalübertragung über ein separates Leitungsnetz verfügt, mit dem mehrere Teilnehmerstellen miteinander verbunden sind, wobei an jeder Teilnehmerstelle eine im wesentlichen identisch aufgebaute, hochintegrierte Schaltung vorgesehen ist, an welche die einzelnen gewünschten Funktionsblöcke wie Ruftaster oder Zustandsfühler angeschlossen sind. Mit Hilfe von elektrischen Verknüpfungsbauteilen wie Kurzschlußbrücken, Dioden oder Kodierschaltern können die gewünschten Funktionen programmiert werden.

Im Gegensatz zum ersten Beispiel weist dieses System keine funktionsunabhängige Schnittstelle auf, sondern bildet trotz seiner Variationsmöglichkeiten in Verbindung mit den Teilnehmerstellen im Rahmen der vorgegebenen Funktionen ein funktionsabhängiges Gesamtsystem, wobei jede Teilnehmerstelle eine komplette Baueinheit darstellt.

Ein Signalübertragungssystem, von dem der Oberbegriff des Patentanspruchs 1 ausgeht, ist bekannt aus IEEE Transactions on consumer electronics, vol. CE-32, no. 1, Februar 1986, New York, US, Seiten 9-18; R. Hamabe et al.: "Home Bus System (HBS) interface LSI and its standard protocol example". Bei diesem Signalübertragungssystem sind Bus-Leitungen vorgesehen, die an mehreren Stellen Auslässe aufweisen. An diese Auslässe können Schnittstellen angeschlossen werden, welche ihrerseits jeweils mit einem Endgerät verbunden werden. Je nach Art des Endgerätes sind unterschiedliche Typen von Schnittstellen verfügbar. Sämtliche Typen enthalten einen gemeinsamen Grundbaustein, der von Typ zu Typ unterschiedlich beschaltet ist. Die Schnittstellen sind somit funktionsabhängig.

Die Aufgabe der Erfindung besteht darin, ein aus baulich und funktionell getrennten Einzelsystemen aufgebautes Signalübertragungssystem zu schaffen, das ein infrastrukturelles Bus-System zum gezielten (adressierten) Austauschen unterschiedlicher Telegramme zwischen beliebigen Punkten und ein modulares Anpassungssystem enthält, welches nach einem bestimmten Crdungsschema aus den Telegrammen eine unmittelbare Zuordnung der jeweiligen in den Telegrammen enthaltenen Gerätefunktionen entnimmt, wobei das Bus-System durch das Anpassungssystem zu einem funktionsabhängigen Gesamtsystem aufgebaut werden kann.

Die Aufgabe wird mit einem Signalübertragungssystem nach dem Anspruch 1 gelöst. Weiterbildungen der Erfindung sind in den Unteransprüchen beschrieben.

Der Vorteil der Erfindung besteht darin, daß die zunächst funktionsunabhängige Grundinstallation noch völlig offen ist für beliebige Anwendungen, d.h. erst in der zweiten Ausbaustufe kann festgelegt werden, für welche Geräte und welche Funktionen (Schalt-, Steuer-, Regel-, Meß- oder Überwachungsfunktionen) das Übertragungssystem verwendet werden und von welchem Ort wohin eine Übertragung erfolgen soll.

Mit der Universal-Schnittstelle kann ein Signal-Telegramm erzeugt und gesendet bzw. empfangen und ausgewertet werden. Es enthält ein Adressierungsfeld mit Quell- und Zieladresse. In der Universal-Schnittstelle wird also festgelegt, an welchen Ort ein ausgesandtes Telegramm gelangen soll (Ziel) bzw. von welchem Ort ein Telegramm gesandt worden ist (Quelle). Die Festlegung der Adressen kann über Einsteller an der Frontseite der Universal-Schnittstelle erfolgen (Anspruch 6).

Der Geräte-Adapter ist auf den jeweiligen Endgeräte-Typ abgestimmt, verarbeitet den ankommenden Schalt-, Tast- oder Abfrage-Befehl bzw. wandelt einen Analog-Wert in eine Form, die die Universal-Schnittstelle versteht und die daraus dann ein entsprechendes Telegramm gestalten kann (Anspruch 2).

Ebenso können andere Geräte-Adapter die Bedeutung eines empfangenen Telegramms zurückgewinnen und in ein Signal wandeln, welches das angeschlossene Endgerät versteht (Anspruch 3).

Ein weiterer Geräte-Adapter kann so ausgebildet sein, daß ein Signalfluß gemäß der vorstehend beschriebenen Art in beiden Richtungen erfolgt (Anspruch 4).

Es kann somit verschiedene geräte- und funktionsbestimmende Geräte-Adapter geben, die wahlweise erst später, nach erfolgter Grundinstallation, mit der Universal-Schnittstelle verbunden werden. Sofern die Geräte-Adapter nicht selbst Befehlsgeber (Schalter, Taster) oder z.B. Anzeige-Einheiten - das heißt, gewissermaßen ein Endgerät - darstellen, können Endgeräte gemäß Anspruch 5 über eine Steckverbindung an den Adapter angeschlossen werden.

Sofern das externe Gerät bereits über eine Telegramm-Erzeugungs- und Adressierungs-Einrichtung verfügt, kann über den Nebenanschluß (Anspruch 7 und 8) eine direkte Einspeisung in das infrastrukturelle Bus-System erfolgen.

Die Universal-Schnittstellen stellen, wie beschrieben, keine passiven Koppelelemente zwischen der Bus-Leitung und den Endgeräten dar. Sie sind vielmehr in der Lage, nach entsprechender Initialisierung von außen, Telegramme zu generieren und auszusenden bzw. in umgekehrter Richtung Bus-Telegramme zu empfangen und diese in für das angeschlossene Gerät verständliche Befehle zu wandeln.

Gemäß Anspruch 9 wird die hierfür benötigte Spannung von einer zentralen Stromversorgung geliefert.

Nachfolgend wird ein Ausführungsbeispiel der Erfindung anhand der Zeichnung näher beschrieben. Es zeigen:
- Figur 1: ein Schaltbild der Grundinstallation,
- Figur 2: eine Unterputz-Universal-Schnittstelle,
- Figur 3: die Adress-Einsteller der Universal-Schnittstelle nach Figur 2,
- Figur 4: ein Funktionsschema der Universal-Schnittstelle,
- Figur 5: eine Universal-Schnittstelle mit Geräte-Adapter.

Eine überschlägige Betrachtung der großen Anwendungsfelder "Schalten, Steuern, Regeln, Messen", "Sicherheit" und Energiemanagement" läßt erkennen, daß es sich bei der Übertragung entsprechender Stell-, Melde- oder Status-Signale sehr häufig entweder um "Ein/Aus"-Schaltsignale oder um "analoge Werte (z.B. °C, Ltr., kg usw.)" handelt, die über das Bus-System zwischen verschiedenen Orten ausgetauscht, konkret gesagt, von einem Gerät zum anderen übermittelt werden sollen.

Außerdem sind folgende, häufig wiederkehrende Übertragungsabläufe erkennbar:

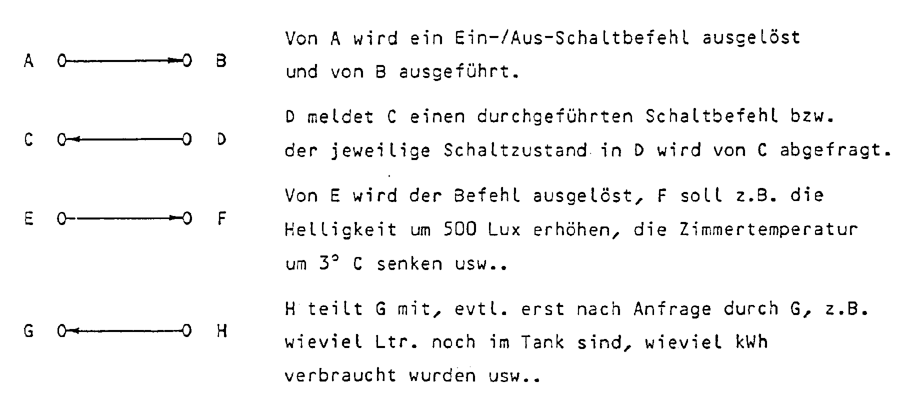

Ein übertragungssystem mit diesen Leistungsmerkmalen läßt den prinzipiellen Aufbau und die Funktionsweise eines Informations-, Steuerungs-, überwachungs- für Haushalte und ähnliche Anwendungen erkennen.

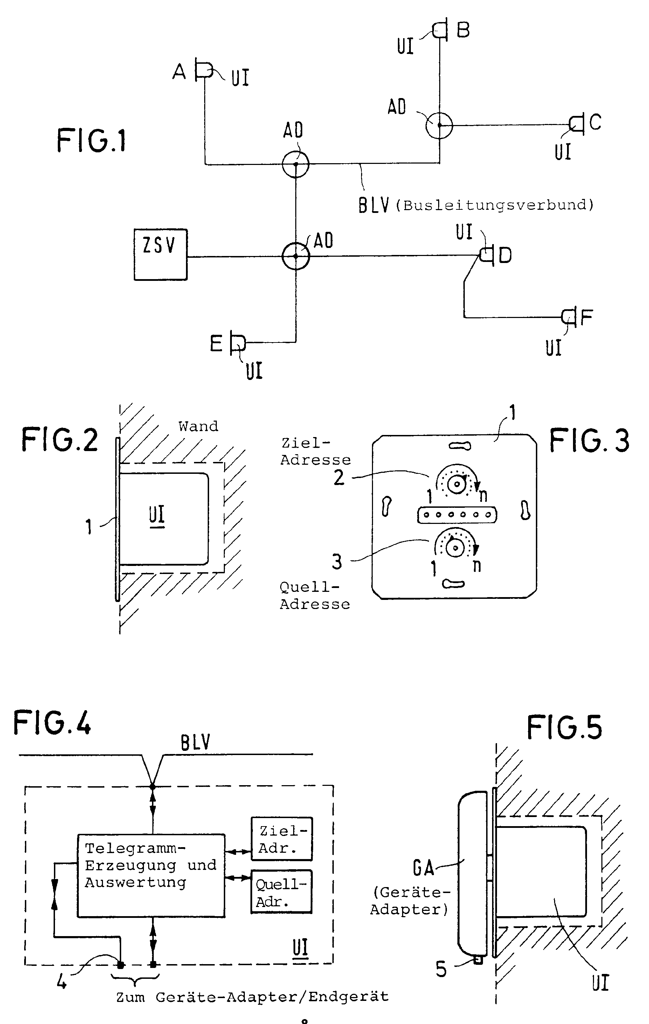

Ein ortsfestes Installationssystem gemäß Figur 1 bildet das vielfältig nutzbare, zunächst funktionsunabhängige Signalübertragungssystem. Es besteht aus einem Leitungsverbund BLV in Baumstruktur (z.B. twisted pair Kabel), dessen jeweiliges Leitungsende abgeschlossen wird mit der Universal-Schnittstelle UI, welche einen mit allen anderen Universal-Schnittstellen geordneten, d.h. für alle beteiligten Geräte verständlichen, Signalverkehr sicherstellt. Die Universal-Schnittstellen sind als Unterputz-Geräte ausgeführt, die mit einer Tragplatte 1 zur Benutzerseite abschließen (Figur 2). Sie sind Bestandteil der Grundinstallation, die die Hausleittechnik-Infrastruktur des Hauses bildet. Diese Grundinstallation ist noch völlig offen für beliebige Anwendungen (Geräte, Funktionen).

Die Universal-Schnittstelle UI ist in der Lage, ein Signal-Telegramm zu erzeugen und auszusenden bzw. zu empfangen und auszuwerten. Sie enthält ein Adressierungsfeld mit Quell- und Ziel-Adresse. In der Universal-Schnittstelle UI wird also festgelegt, an welchen Ort das ausgesandte Telegramm gelangen soll (Ziel) bzw. von welchem Ort ein Telegramm gesendet worden ist (Quelle). Die Festlegung der Adressen erfolgt über Einsteller 2,3 im Tragplattenbereich (Figur 3).

Die Universal-Schnittstelle UI enthält zusätzlich einen Nebenanschluß 4, über den extern (z.B. vom Endgerät) erzeugte Telegramme (inklusive Adressierung) direkt in das Bus-System eingespeist werden können. Umgekehrt sind über diesen Anschluß Bus-Telegramme entnehmbar, die dann nicht von der Universal-Schnittstelle UI, sondern vom Endgerät weiterverarbeitet bzw. ausgewertet werden können (Figur 4).

Nach bisheriger Definition stellt die Universal-Schnittstelle UI nicht etwa nur ein passives Koppelelement zwischen Bus-Medium und Endgerät dar; es soll auch in der Lage sein, nach entsprechender Initialisierung von außen, Telegramme zu generieren und auszusenden bzw. in umgekehrter Richtung Bus-Telegramme zu empfangen und diese in für das angeschlossene Gerät verständliche Befehle zu wandeln. Die hierfür benötigte Elektronik muß mit Spannung versorgt werden, die eine zentrale Stromversorgung ZSV liefert. Die Stromversorgung ZSV ist also Bestandteil der Grundinstallation und versorgt alle Universal-Schnittstellen UI (A-F; Figur 1). Ggf. muß eine max. zulässige Anzahl anschließbarer Universal-Schnittstellen UI festgelegt werden. Das Gesamtsystem würde folglich aus mehreren separat versorgten Bereichen bestehen, die jedoch funktionell eine Einheit bilden.

Die Baumstruktur des Bus-Systems bedingt Verzweigungspunkte. Hierfür sind lt. Figur 1 geeignete Abzweigdosen AD vorzusehen.

Mit der bisher beschriebenen Grundinstallation ist es zwar möglich, unterschiedliche Telegramme gezielt (adressiert) zwischen beliebigen Punkten auszutauschen, dem jeweiligen Telegramm ist jedoch nicht unmittelbar entnehmbar, welche Gerätefunktion ihm zugeordnet wurde. Es muß deshalb erst nach einem für das Gesamtsystem gültigen Ordnungsschema festgestellt werden, ob es sich z.B. um einen Schaltbefehl, um eine Statusmeldung, um eine Analogwertangabe, um einen Notruf oder um eine Alarmmeldung usw. handelt (Telegramm-Empfang) bzw. handeln soll (Telegramm-Aussendung). Diese Festlegung übernimmt der Geräte-Adapter GA.

Der Geräte-Adapter ist auf den jeweiligen Endgeräte-Typ abgestimmt, verarbeitet den ankommenden Schalt-, Tast- oder Abfrage-Befehl bzw. wandelt einen Analog-Wert in eine Form, die die Universal-Schnittstelle UI versteht, und die daraus ein entsprechendes Telegramm gestalten kann. Ebenso können andere Geräte-Adapter die Bedeutung eines empfangenen Telegramms zurückgewinnen und in ein Signal wandeln, welches das angeschlossene Endgerät versteht. Eine dritte Gruppe der Geräte-Adapter ermöglicht entsprechenden Signalfluß in beiden Richtungen.

Es wird folglich verschiedene geräte- und funktionsbestimmende Adapter geben, die wahlweise erst später, nach erfolgter Grundinstallation, die Universal-Schnittstellen UI ergänzen (Figur 5). Die Geräte-Adapter GA weisen mechanische und elektrische Verbindungsmittel auf, mit denen sie an der Tragplatte 1 mit der Universal-Schnittstelle UI verbunden werden. Sofern die Geräte-Adapter nicht selbst Befehlsgeber (Schalter, Taster) oder z.B. Anzeige-Einheiten, d.h. gewissermaßen ein Endgerät, darstellen, enthalten sie einen Steckkontakt 5, an den das externe Endgerät über eine Zuleitung angeschlossen werden kann.

Wird eine Universal-Schnittstelle vorübergehend nicht benötigt, kann eine designbezogene Blindabdeckung den vorläufigen Abschluß bilden.

## Patentansprüche

1. Digitales Signalübertragungssystem für korrespondierende Endgeräte zum Schalten, Steuern, Regeln, Messen und/oder Überwachen, insbesondere für die Verwendung in der Hausleittechnik, mit Hilfe von Teilnehmerstellen, die über ein Leitungsverbundnetz (BLV) miteinander verbunden sind und jeweils eine Schnittstelle zum Anschluß eines Endgerätes aufweisen, um ein Signal-Telegramm zu erzeugen und auszusenden bzw. zu empfangen und auszuwerten, ankommende Befehle zu verarbeiten bzw. in Analog-Werte oder Digital-Werte umzuwandeln, wobei jede Schnittstelle mit allen anderen Schnittstellen einen Signal-Telegramm-Verkehr durchführen kann,
**dadurch gekennzeichnet**,
daß die Schnittstellen funktionsunabhängige Universal-Schnittstellen (UI) sind, die zusammen mit dem Leitungsverbundnetz (BLV) Bestandteil der Grundinstallation sind, und daß die Universal-Schnittstellen durch nicht zur Grundinstallation gehörende externe funktionsbestimmende Geräte-Adapter (GA) ergänzbar sind.

2. Signalübertragungssystem nach Anspruch 1, dadurch gekennzeichnet, daß der Geräte-Adapter (GA) auf das jeweilige Endgerät (Schaltgerät, Steuergerät, Regelgerät, Meßgerät, Überwachungsgerät) abgestimmt ist und die vom Endgerät gelieferten Signale in eine Form umwandelt, die die Universal-Schnittstelle (UI) versteht.

3. Signalübertragungssystem nach Anspruch 1 oder 2, dadurch gekennzeichnet, daß der Geräte-Adapter (GA) die ankommenden Telegramme entschlüsselt, so daß sie das jeweilige Endgerät versteht.

4. Signalübertragungssystem nach einem der Ansprüche 1 bis 3, dadurch gekennzeichnet, daß der Geräte-Adapter (GA) einen Wandler enthält, der die vom Endgerät kommenden Signale in eine Form umwandelt, daß sie die Universal-Schnittstelle (UI) versteht und einen weiteren Wandler enthält, der die ankommenden Telegramme in eine Form umwandelt, daß sie das jeweilige Endgerät versteht.

5. Signalübertragungssystem nach einem der Ansprüche 1 bis 4, dadurch gekennzeichnet, daß der Geräte-Adapter (GA) einen Steckkontakt (5) für ein Endgerät aufweist.

6. Signalübertragungssystem nach einem der Ansprüche 1 bis 5, dadurch gekennzeichnet, daß die Universal-Schnittstelle (UI) ein Adressierungsfeld (2,3) zur Einstellung von Quell- und Zieladressen enthält.

7. Signalübertragungssystem nach einem der Ansprüche 1 bis 6, dadurch gekennzeichnet, daß die Universal-Schnittstelle (UI) einen Nebenanschluß (4) enthält, über den extern, z.B. von einem Endgerät, erzeugte Telegramme direkt in das Leitungsverbundnetzwerk eingespeist werden.

8. Signalübertragungssystem nach Anspruch 7, dadurch gekennzeichnet, daß über den Nebenanschluß (4) Telegramme übertragen werden, die direkt vom Endgerät ausgewertet bzw. erzeugt werden.

9. Signalübertragungssystem nach einem der Ansprüche 1 bis 8, dadurch gekennzeichnet, daß die Grundinstallation eine zentrale Stromversorgung (ZSV) enthält.

10. Signalübertragungssystem nach einem der Ansprüche 1 bis 9, dadurch gekennzeichnet, daß der Geräte-Adapter (GA) über elektrische und mechanische Verbindungsmittel mit der Universal-Schnittstelle lösbar verbunden ist.

11. Signalübertragungssystem nach einem der Ansprüche 1 bis 10, dadurch gekennzeichnet, daß der Geräte-Adapter (GA) mit dem Endgerät eine Baugruppe bildet.

12. Signalübertragungssystem nach Anspruch 11, dadurch gekennzeichnet, daß die Baugruppe als Endgerät einen Befehlsgeber (Schalter oder Taster) enthält.

13. Signalübertragungssystem nach Anspruch 11, dadurch gekennzeichnet, daß die Baugruppe als Endgerät eine Anzeigeeinheit enthält.

## Claims

1. A digital signal transmission system for terminal units communicating with each other, for switching, controlling, regulating, measuring and/or monitoring, in particular for use in in-house information distribution network technology, using subscriber stations interconnected via a combined line network (BLV) and each having an interface for connecting a terminal unit, so as to generate and transmit or receive and evaluate a signal telegram, to process incoming instructions or convert them into analog or digital values, each interface being able to perform signal telegram communication with all other interfaces,
characterised in
that said interfaces are function-independent universal interfaces (UI) which form a part of the basic installation together with said combined line network (BLV) and that said universal interfaces may be complemented by external function-determining apparatus adaptors (GA) that do not form part of said basic installation.

2. The signal transmission system of claim 1, characterised in that said apparatus adaptor (GA) is adapted to the respective terminal unit (switching device, control device, regulating device, measuring device, monitoring device) and converts the signals provided by said terminal unit to a form understandable to said universal interface (UI).

3. The signal transmission system of claim 1 or 2, characterised in that said apparatus adaptor (GA) decodes the incoming telegrams so that a respective terminal unit understands the same.

4. The signal transmission system of one of claims 1 to 3, characterised in that said apparatus adaptor (GA) includes a converter converting the signals provided by said terminal unit to a form understandable to said universal interface (UI) and a further converter converting the incoming telegrams to a form understandable to a respective terminal unit.

5. The signal transmission system of one of claims 1 to 4, characterised in that said apparatus adaptor (GA) includes a plug contact (5) for a terminal unit.

6. The signal transmission system of one of claims 1 to 5, characterised in that said universal interface (UI) includes an address field (2, 3) for setting source and target addresses.

7. The signal transmission system of one of claims 1 to 6, characterised in that said universal interface (UI) includes an auxiliary terminal (4) via which telegrams generated externally, e. g. by a terminal unit, are fed directly into the combined line network.

8. The signal transmission system of claim 7, characterised in that telegrams are transmitted via said auxiliary terminal (4) that are evaluated or generated directly by said terminal unit.

9. The signal transmission system of one of claims 1 to 8, characterised in that said basic installation includes a central power supply (ZSV).

10. The signal transmission system of one of claims 1 to 9, characterised in that said apparatus adaptor (GA) is detachably connected to said universal interface by electrical and mechanical connecting means.

11. The signal transmission system of one of claims 1 to 10, characterised in that said apparatus adaptor (GA) and said terminal unit form an assembly.

12. The signal transmission system of claim 11, characterised in that the terminal unit of said assembly is a command means (switch or key).

13. The signal transmission system of claim 11, characterised in that the terminal unit of said assembly is a display unit.

## Revendications

1. Système de transmission de signaux numérique pour appareils terminaux correspondants pour la commutation, la commande, le réglage, la mesure et/ou la surveillance, en particulier destiné à être utilisé dans la technique des installations domestiques, à l'aide de **postes de réseau** qui sont reliés entre eux par un réseau de connexion de lignes (BLV) et qui présentent, chacun, une **interface** pour le raccordement d'un appareil terminal, destiné à générer et à envoyer, respectivement à recevoir et à évaluer, des télégrammes signaux, à traiter, respectivement à convertir en valeurs analogiques ou en valeurs numériques, des instructions qui arrivent, chaque **interface** pouvant réaliser avec toutes les autres **interfaces** une communication de télégrammes signaux, caractérisé en ce que les **interfaces** sont des interfaces universelles (UI) indépendantes de la fonction qui, conjointement au réseau de connexion de lignes (BLV), font partie de l'installation de base, et que les interfaces universelles peuvent être complétées par des adaptateurs d'appareil (GA) externes déterminant la fonction et n'appartenant pas à l'installation de base.

2. Système de transmission de signaux suivant la revendication 1, caractérisé en ce que l'adaptateur d'appareil (GA) est réglé pour l'appareil terminal concerné (appareil de commutation, appareil de commande, appareil de réglage, appareil de mesure, appareil de surveillance) et convertit les signaux fournis par l'appareil terminal en une forme que comprend l'interface universelle (UI).

3. Système de transmission de signaux suivant la revendication 1 ou 2, caractérisé en ce que l'adaptateur d'appareil (GA) décode les télégrammes qui arrivent, de sorte que l'appareil terminal concerné les comprend.

4. Système de transmission de signaux suivant l'une des revendications 1 à 3, caractérisé en ce que l'adaptateur d'appareil (GA) comporte un convertisseur qui convertit les signaux venant de l'appareil terminal en une forme telle que l'interface universelle (UI) les comprend et un autre convertisseur qui convertit les télégrammes qui arrivent en une forme telle que l'appareil terminal concerné les comprend.

5. Système de transmission de signaux suivant l'une des revendications 1 à 4, caractérisé en ce que l'adaptateur d'appareil (GA) présente un contact enfichable (5) pour un appareil terminal.

6. Système de transmission de signaux suivant l'une des revendications 1 à 5, caractérisé en ce que l'interface universelle (UI) comporte un champ d'adressage (2, 3) pour la mise en place d'adresses de source et de destination.

7. Système de transmission de signaux suivant l'une des revendications 1 à 6, caractérisé en ce que l'interface universelle (UI) comporte une connexion auxiliaire (4) par laquelle des télégrammes générés extérieurement, par exemple par **un appareil terminal**, **sont injectés** directement dans le réseau de connexion de lignes.

8. Système de transmission de signaux suivant la revendication 7, caractérisé en ce que par la connexion auxiliaire (4) sont transmis des télégrammes qui sont directement évalués, respectivement générés, par l'appareil terminal.

9. Système de transmission de signaux suivant l'une des revendications 1 à 8, caractérisé en ce que l'installation de base comporte une alimentation de courant centrale (ZSV).

10. Système de transmission de signaux suivant l'une des revendications 1 à 9, caractérisé en ce que l'adaptateur d'appareil (GA) est raccordé de manière amovible à l'interface universelle par des moyens de connexion électriques et mécaniques.

11. Système de transmission de signaux suivant l'une des revendications 1 à 10, caractérisé en ce que l'adaptateur d'appareil (GA) forme un module avec l'appareil terminal.

12. Système de transmission de signaux suivant la revendication 11, caractérisé en ce que le module comporte, comme appareil terminal, un donneur d' instructions (interrupteur ou touche).

13. Système de transmission de signaux suivant la revendication 11, caractérisé en ce que le module comporte, comme appareil terminal, une unité d'affichage.
